# DEMANDE DE BREVET EUROPEEN

(11) **EP 1 980 536 A1**
(43) Date de publication de la demande: **15.10.2008**
(21) Numéro de dépôt: 08300111.5
(22) Date de dépôt: 25.02.2008
(51) Int. Cl.: C02F 1/02, C02F 103/28

(54) **Procédé de traitement d'eaux industrielles permettant de limiter la formation d'un biofilm et dispositif pour la mise en oeuvre du procédé**

(30) Priorité: 27.02.2007 FR 0753539
(71) Demandeur: GAZ DE FRANCE, 75017 Paris (FR)
(72) Inventeur: Marchand, Bernard, 75018 Paris (FR); Mambre, Véronique, 75015 Paris (FR); Lenon, Gilles, 38340 Voreppe (FR); Neyret, Christophe, 38360 Sassenage (FR)
(74) Mandataire: Thinat, Michel

(57) **Abrégé**

L'invention concerne un procédé de traitement d'eaux industrielles utilisées dans la fabrication de produits contenant des fibres cellulosiques, le procédé étant destiné à réduire la formation de dépôts biologiques sur des éléments d'une installation de fabrication de tels produits. Ce procédé comprend une étape de chauffage d'une partie des eaux industrielles à une température supérieure à une température seuil et une étape de mélange des eaux chauffées avec le restant des eaux industrielles.

L'invention concerne également un dispositif pour la mise en oeuvre de ce procédé.

## Description

L'invention concerne un procédé de traitement d'eaux industrielles utilisées dans la fabrication de produits contenant des fibres cellulosiques, par exemple dans l'industrie papetière, ainsi qu'un dispositif pour la mise en oeuvre d'un tel procédé.

Dans le cadre de la présente invention, le terme « eaux industrielles » désigne tout liquide, essentiellement de l'eau, utilisé pour la fabrication d'un produit. Lorsque les produits en question sont des produits issus de l'industrie de la papeterie, c'est-à-dire du papier, du carton ou des produits hygiéniques, les eaux industrielles sont essentiellement celles que l'on utilise pour préparer une pâte plus ou moins liquide et contenant des fibres cellulosiques. Toutefois, la présente invention concerne également tout liquide, par exemple tout mélange aqueux, circulant dans des circuits auxiliaires tels les circuits de refroidissement des machines utilisées pour la fabrication de produits contenant des fibres cellulosiques et qui risque d'être, ou qui est même, contaminé au cours du fonctionnement de la machine.

De par leurs caractéristiques (température, richesse en fibres cellulosiques et matière organique), les eaux de l'industrie papetière sont particulièrement propices à la prolifération de micro-organismes. Or, ces micro-organismes sont à l'origine de la formation de dépôts biologiques, également appelés « biofilms » ou « slimes », qui s'accumulent sur les parois des circuits, encrassent les machines à papier, provoquent des tâches sur les feuilles et des casses.

Le mécanisme de formation des biofilms est extrêmement complexe, et, aujourd'hui encore, relativement mal connu. Seules certaines espèces bactériologiques, dites slimogènes, forment ces dépôts. La quantité de biofilm formé n'est pas directement corrélée à la quantité de micro-organismes présents dans le circuit, mais à de nombreux paramètres (population slimogène, caractéristiques nutritives du circuit etc.), dont une grande partie est inconnue, les modes de traitement actuels (biocides en général) étant souvent ajustés de façon empirique.

Actuellement, les modes de traitement en papeterie sont essentiellement l'utilisation de biocides (80 % des traitements) ou l'utilisation d'oxydants forts (20 % des traitements). Ces traitements actuels présentent, en plus de leurs coûts élevés, de nombreux inconvénients, notamment d'un point de vue environnemental. Ce sont en effet des substances toxiques, de plus en plus réglementées, et qui se retrouvent dans les stations d'épuration en concentrations suffisamment fortes pour troubler le traitement biologique des effluents. D'autre part, ces biocides ont un mode d'action sélectif, c'est-à-dire qu'ils n'éliminent qu'un spectre limité de bactéries, avec, de plus, des effets d'accoutumance possibles. Enfin, ils présentent des risques sanitaires pour les utilisateurs. L'étude de l'état de la technique a mis en évidence de nombreux documents présentant des formulations chimiques de biocides, comme par exemple les documents FR-2 021 449 et US-5 466 425.

On retrouve au travers de l'étude de l'état de la technique d'autres méthodes permettant de réduire la formation de biofilms, telles que:
- le traitement des eaux par des radiations ultraviolettes (brevet US-5 466 425). Cependant, ceci paraît difficilement applicable à l'industrie papetière, compte-tenu du fait :
   o que les eaux papetières sont des milieux opaques, ce qui ne permet pas une bonne transmission du rayon lumineux,
   o que la mise en oeuvre du traitement passe par une définition précise des caractéristiques (fréquence et puissance) de la longueur d'onde, qui paraît très difficile à réaliser compte-tenu de la variabilité de la composition des eaux de process ;
- le traitement des eaux par injection en pluie ou sous forme pulvérisée des eaux dans une enceinte de vapeur, sous pression, permettant d'élever immédiatement la température du produit. Celui-ci est ensuite refroidi rapidement par détente dans une chambre à vide (brevet FR-1 253 896). Ce procédé, appliqué au lait ou à des produits dérivés ne paraît pas applicable aux eaux papetières, dont les fibres risqueraient de boucher le tuyau de pulvérisation.

Le but de l'invention est de proposer une solution qui permette de traiter des eaux industrielles utilisées dans la fabrication de produits contenant des fibres cellulosiques, de manière à réduire la formation de biofilms (slimes) et d'être donc une solution préventive.

Le but de l'invention est atteint avec un procédé de traitement d'eaux industrielles utilisées dans la fabrication de produits contenant des fibres cellulosiques, selon lequel la prévention de la formation de dépôts biologiques sur des éléments d'une installation de fabrication de tels produits est obtenue en chauffant une partie des eaux industrielles à une température supérieure à une température seuil et en laissant cette partie des eaux, après avoir été chauffée pendant une durée prédéterminée, se mélanger avec le restant des eaux industrielles de l'installation.

Le chauffage de la partie correspondante des eaux industrielles peut être effectué soit dans l'un quelconque des conduits de l'installation, sans dérivation, soit dans une enceinte de traitement vers laquelle la partie des eaux industrielles à chauffer est dérivée, cette partie des eaux étant réintroduite dans le restant des eaux industrielles après avoir été chauffée.

Avantageusement, mais non exclusivement, l'énergie calorifique nécessaire au chauffage de la partie des eaux industrielles à chauffer est apportée par de la vapeur avec laquelle cette partie des eaux industrielles est mise en contact.

Plusieurs façons de mettre les eaux industrielles en contact avec la vapeur existent, dont par exemple:
- injection de vapeur dans les eaux,
- introduction des eaux dans un bain de vapeur,
- mélange de la vapeur et des eaux dans une buse avant dispersion.

Le procédé selon l'invention fonctionne essentiellement selon le principe d'une transformation des caractéristiques des eaux industrielles de manière à faire perdre aux micro-organismes slimogènes leur base de vie. Ceci est fait en modifiant la nature nutritive des eaux industrielles de l'industrie papetière et analogue indiquée plus haut, grâce à laquelle nature ces micro-organismes vivent, se prolifèrent et se déposent sur les parois des conduits de l'installation. Mais ceci peut également être fait en produisant dans ces eaux des composants chimiques néfastes au développement des micro-organismes.

Selon l'invention, cette transformation est obtenue en chauffant seulement une partie des eaux industrielles et en mélangeant cette partie ensuite avec le restant des eaux industrielles.

Comme des essais l'ont montré, il n'est absolument pas nécessaire de chauffer une très grande partie des eaux industrielles d'une installation donnée, ni même la totalité de ces eaux. Une relativement faible partie, de l'ordre de 1 à 20%, des eaux industrielles d'une installation suffit.

En effet, une telle petite quantité d'eaux « mortes » suffit pour empêcher la formation de micro-organismes en quantités gênantes ou pour le moins pour réduire la quantité de micro-organismes à un taux insignifiant.

Autrement dit, la modification de la nature des eaux industrielles selon les dispositions de l'invention se traduit par un effet rémanent inhibiteur de la formation de slime, c'est-à-dire la partie des eaux industrielles chauffée selon la présente invention constituera un biocide naturel qui évite les désavantages ou nuisances implicites à l'utilisation de biocides chimiques.

Selon différentes variantes de mise en oeuvre possibles du procédé de l'invention, l'invention concerne également l'une ou plusieurs des caractéristiques suivantes, considérées isolément ou selon toute combinaison techniquement possible :
- la vapeur est mise en contact directement dans les eaux des différents circuits formés par les conduits de l'installation;
- une partie des eaux est dérivée en plusieurs partie(s) et la vapeur est injectée dans chacune de ces parties dérivées des eaux des circuits;
- au moins une partie des eaux est dérivée et une ou des quantités partielles de vapeur sont mises en contact avec la ou chacune des parties dérivées des eaux et une autre quantité de vapeur est mise en contact directement dans la partie non dérivée des eaux des circuits;
- la partie des eaux industrielles à chauffer est chauffée dans un environnement sous pression pour réaliser un traitement à une température supérieure à 100 °C ;
- la pression est engendrée, dans une enceinte ou dans l'un quelconque des conduits de l'installation, par accélération de la partie des eaux et la partie des eaux chauffée traverse un détendeur avant de se mélanger avec le restant des eaux industrielles ;
- la température seuil est environ 80°C;
- le procédé comprend une étape complémentaire classique de traitement des eaux par introduction de biocides.
- la ou chacune des quantités de vapeur mise en contact est fonction du temps de maintien des eaux au-dessus d'une température déterminée ;
- la ou chacune des quantités de vapeur mise en contact est fonction du temps de maintien des eaux au-dessus d'une pression prédéterminée.

Le procédé de l'invention présente de nombreux avantages obtenus grâce à la mise en contact direct des eaux industrielles avec de la vapeur:
- pas de recours à des substances toxiques ou nuisibles à l'environnement,
- action non sélective sur les micro-organismes, contrairement aux traitements biocides qui n'agissent que sur des familles bien définies de bactéries,
- peu d'effet d'accoutumance par rapport aux biocides, dont les compositions doivent être régulièrement modifiées et adaptées
- le procédé peut aussi être envisagé en combinaison à un traitement biocide, dont il permet alors de réduire les quantités utilisées
- le traitement selon l'invention est supposé agir par un double effet de décontamination et de modification de la nature des eaux, et
- le traitement ne nécessite pas d'isolation d'une quelconque partie de l'installation, mais est effectué en maintenant la production des produits cellulosiques.

D'un point de vue pratique, le traitement des eaux industrielles et notamment des eaux papetières consiste en une mise en contact de ces eaux avec de la vapeur. Cette mise en contact peut être continue ou réalisée à une fréquence déterminée.

Le traitement peut être appliqué en n'importe quel endroit du circuit des eaux papetières :
- en un seul ou en plusieurs endroits,
- directement dans les eaux ou dans une partie dérivée des eaux ou dans plusieurs parties dérivées des eaux, selon des ratios d'eau circulant dans chaque dérivation à déterminer.

Les paramètres de traitement (température de traitement, durée de maintien à haute température, pression, etc.) sont évalués en fonction des caractéristiques de l'installation.

Le traitement est avantageusement réalisé sous pression, pour pouvoir atteindre des températures supérieures à 100°C. Le dosage de la vapeur par exemple à injecter peut se faire par le contrôle de la durée d'injection de vapeur, du débit de vapeur ou d'eau, ou de la pression de traitement.

Pour optimiser l'efficacité énergétique du procédé, l'équipement de mise en contact de la vapeur et des eaux peut être complété par :
- un système d'échangeurs permettant de préchauffer l'eau à traiter par récupération de la chaleur de l'eau traitée,
- et/ ou une cuve de stockage calorifugée permettant de maintenir les eaux à la température de traitement pendant un temps déterminé.

Le procédé peut éventuellement être combiné avec un traitement biocide complémentaire.

Des essais préliminaires ont montré que le traitement permet de réduire de façon très significative la quantité de flore vivante présente dans les eaux industrielles.

La faisabilité du procédé et son efficacité sur la réduction de la formation de biofilm ont été testés à l'aide d'autres essais décrits ci-après.

Ainsi, le but de l'invention est également atteint avec un dispositif pour la mise en oeuvre d'un procédé de traitement d'eaux industrielles utilisées dans une installation de fabrication de produits contenant des fibres cellulosiques, caractérisé en ce qu'il comprend des moyens de chauffage permettant de chauffer une partie des eaux industrielles à une température supérieure à une température seuil et de mélanger cette partie des eaux, après l'avoir chauffée, avec le restant des eaux industrielles de l'installation.

Selon différents modes de réalisation possibles du dispositif de l'invention, l'invention concerne également l'une au moins des caractéristiques suivantes, considérées isolément ou selon toute combinaison techniquement possible:
- la partie des eaux industrielles à chauffer est dérivée vers une enceinte de traitement ;
- la partie des eaux industrielles à chauffer est chauffée dans l'un quelconque des conduits de l'installation, sans dérivation ;
- le dispositif est conçu pour fonctionner localement sous pression, afin d'atteindre des températures supérieures à 100°C ;
- le dispositif comprend un moyen de récupération de la chaleur provenant de l'eau traitée, par exemple un système d'échangeur ;
- le dispositif comprend des moyens de dosage permettant de commander l'injection de la vapeur selon la quantité d'énergie à apporter.

D'autres caractéristiques et avantages de la présente invention ressortiront de la description ci-après d'un mode de réalisation d'un dispositif pour la mise en oeuvre du procédé de l'invention et de résultats obtenus avec ce dispositif. La description est faite en référence aux dessins dans lesquels
la figure 1 représente le circuit d'un dispositif selon l'invention,
les figures 2 et 3 représentent schématiquement l'intégration du dispositif selon l'invention dans une installation de fabrication de papier,
la figure 4 résume différentes conditions de traitements ainsi que des tests associés et
la figure 5 représente des résultats de traitements effectués d'après le procédé de l'invention.

### • Système de mise en contact de la vapeur avec l'eau blanche

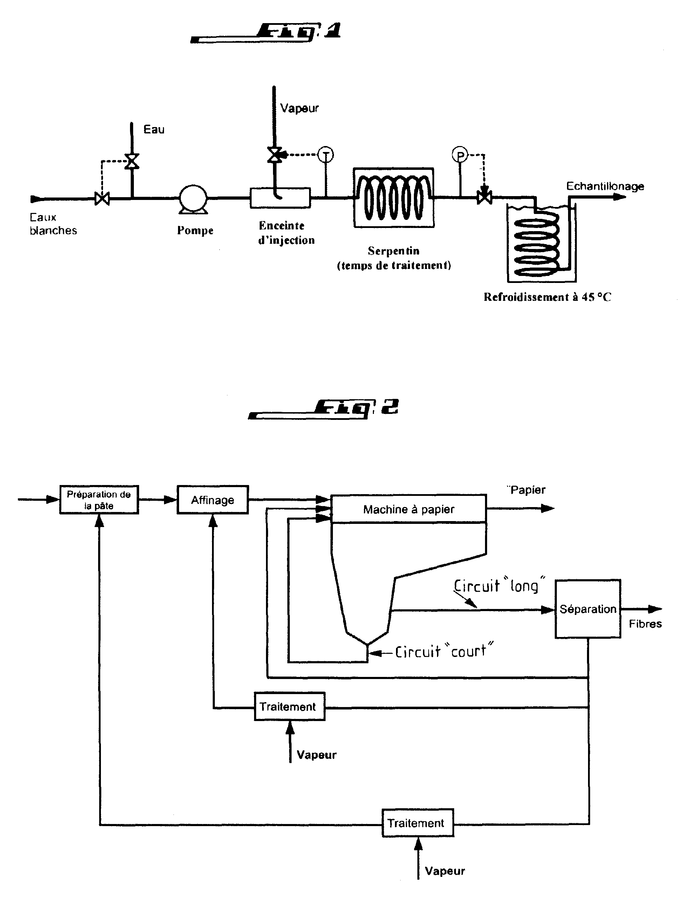

Le schéma de principe du système expérimental de mise en contact de la vapeur avec l'eau blanche est donné dans la figure 1. Des eaux blanches non traitées sont introduites, à l'aide d'une pompe, dans une cuve de traitement maintenue sous pression. Ces eaux sont mises au contact de la vapeur permettant d'atteindre la température de traitement. L'eau traitée circule ensuite, pendant le temps de traitement fixé, dans un serpentin placé dans une enceinte calorifugée. En sortie, un détendeur permet d'abaisser la pression, et l'eau est refroidie à 40-45°C (température des eaux de process papetières) dans une cuve.

### • Intégration du système de mise en contact dans un circuit d'eaux industrielles

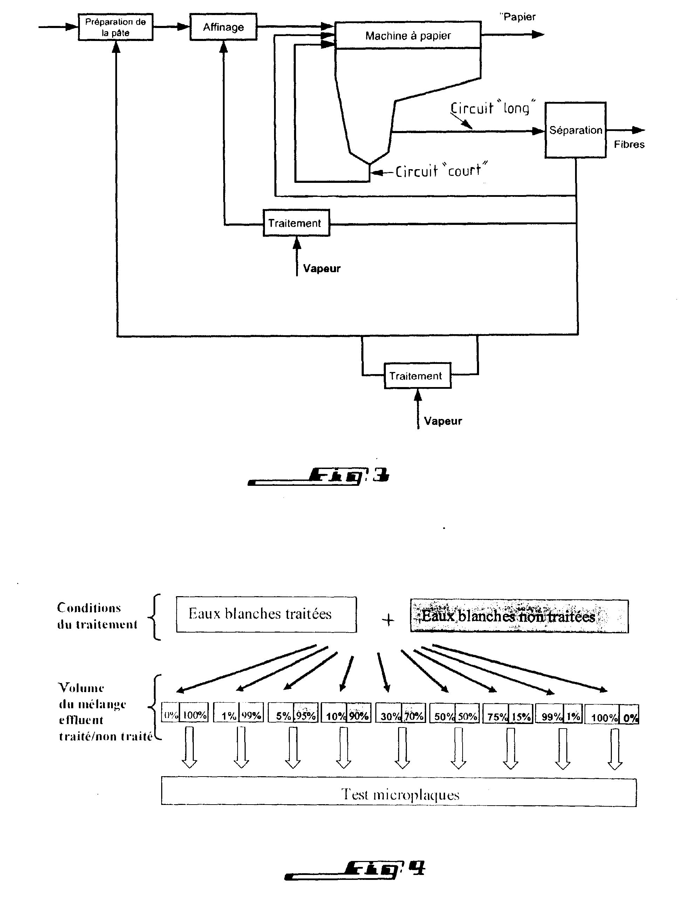

Les figures 2 et 3 représentent des exemples différents de mise en oeuvre du traitement dans un circuit d'eaux.

La figure 2 représente schématiquement un circuit d'eaux industrielles dans une installation de fabrication de papier. La pâte arrivant dans une station de préparation est mélangée avec des eaux blanches traitées provenant d'une partie du circuit « long ». Ensuite, la pâte est convoyée vers une station d'affinage où arrive une autre partie des eaux du circuit « long », traitée elle aussi. La pâte affinée est envoyée vers une machine à papier, en tête de laquelle elle est mélangée avec des eaux issues du circuit « long » et du circuit « court ». En sortie, sont récupérées, en dehors du papier obtenu, des eaux contenant des fibres non consommées pour former le papier.

Une partie de l'eau récupérée sous la machine à papier est renvoyée directement en tête de la machine à papier par le circuit « court », le restant, le circuit « long » est dirigé vers une station de séparation eau/fibres qui permet de générer des eaux de concentration différentes qui sont utilisées en différents points du circuit en fonction du besoin. Sur le schéma, deux branches du circuit « long » sont intégralement traitées par mises en contact avec la vapeur.

La figure 3 représente une variante des circuits de la figure 2. La variation consiste en un traitement d'une partie seulement des eaux passant par la branche du circuit « long » renvoyée vers la station d'affinage et un traitement complet des eaux du « circuit long » renvoyées vers la préparation de la pâte.

### • Conditions de traitements testées

Cinq conditions de traitement (couple temps, température) ont été retenues, le tableau 1 récapitule ces différentes valeurs.

**Tableau 1**

| Température de traitement | 120 °C | 140 °C |
|---|---|---|
| Durée du traitement | | 160 s |
| | 1 800 s | 18 s |
| | 160 s | 2 s |

Pour simuler le fait que seul un débit dérivé des eaux de process est traité, l'effluent traité est ensuite mélangé à un certain volume d'effluent non traité. Différentes conditions de mélange ont été testées afin de déterminer le seuil d'efficacité du traitement. Ces différentes conditions de traitements ainsi que les tests qui sont associés sont récapitulés dans la figure 4.

### • Définition du test microplaques permettant d'évaluer la quantité de biofilm formé dans les eaux traitées

Le test consiste à développer du biofilm sur les picots d'un couvercle de microplaque 96 puits, puis à en évaluer la quantité par révélation au cristal violet. L'effluent à tester est placé dans les puits de la microplaque. Les picots sont incubés à 45° C pendant 72 heures puis colorés au cristal violet. Ils sont ensuite rincés à l'eau distillée et transférés dans un fond de microplaques dont tous les puits sont remplis d'éthanol absolu. Les cellules du biofilm retenant le cristal violet sont ainsi décolorées et la densité optique mesurée à 570 nm proportionnelle à la quantité de biofilm formé.

### • Résultats

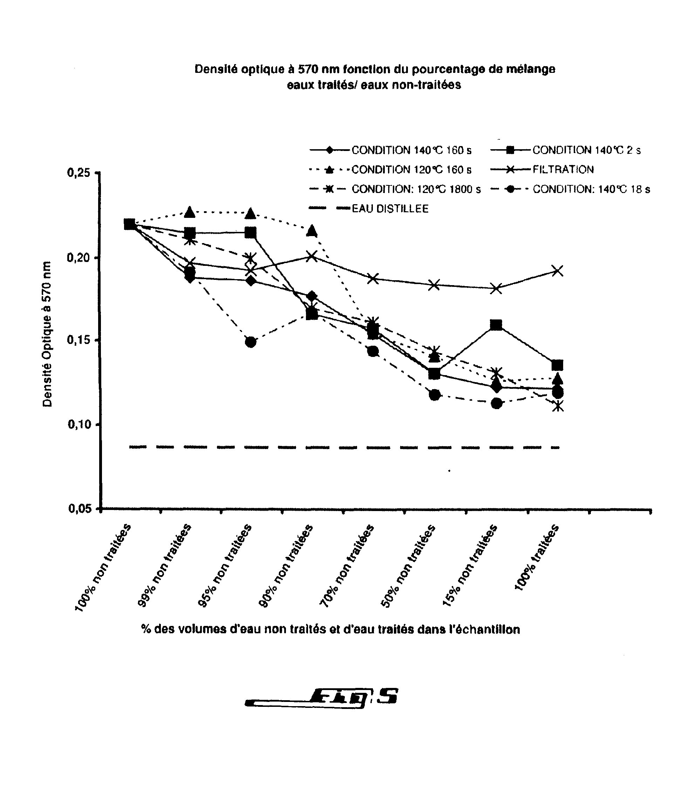

Les essais microplaques ont été effectués sur une durée de 7 jours pour l'ensemble des conditions d'injections (120°C pendant 160s et 1800 s ; 140°C pendant 2, 18 et 160s). Les valeurs de densité optique, proportionnelles à la quantité de biofilm formée sur les picots, sont données dans la figure 5.

Cette série d'essais a permis de mettre en évidence, pour toutes les conditions expérimentales, une baisse de la densité optique mesurée après 7 jours d'incubation, baisse significative pour une proportion d'effluent traité supérieure à 10 %, et maximale à partir de 50 %.

Lorsque les eaux testées sont uniquement composées d'effluent traité, la densité optique est proche de celle de l'eau distillée et la quantité de biofilm formé très faible.

D'un point de vue qualitatif, la baisse de densité optique traduit la réduction de la quantité de biofilm formé. L'efficacité du traitement malgré un réensemencement de la solution traitée par des eaux non traitées valide la rémanence de celui-ci.

Les résultats n'ont pas permis de hiérarchiser l'efficacité des différents traitements réalisés, du fait, à la fois, des dérives de température dans le circuit de traitement et de la précision des mesures.

## Revendications

1. Procédé de traitement d'eaux industrielles utilisées dans la fabrication de produits contenant des fibres cellulosiques, le procédé étant destiné à réduire la formation de dépôts biologiques sur des éléments d'une installation de fabrication de tels produits,
**caractérisé en ce qu'**une partie des eaux industrielles est chauffée à une température supérieure à une température seuil et **en ce que** cette partie des eaux, après avoir été chauffée, se mélange avec le restant des eaux industrielles de l'installation.

2. Procédé selon la revendication 1, **caractérisé en ce que** la partie des eaux industrielles à chauffer est dérivée vers une enceinte de traitement et **en ce que** cette partie des eaux est réintroduite dans le restant des eaux industrielles après avoir été chauffée.

3. Procédé selon la revendication 1, **caractérisé en ce que** la partie des eaux industrielles à chauffer est chauffée dans l'un quelconque des conduits de l'installation, sans dérivation.

4. Procédé selon l'une quelconque des revendications 1 à 3, **caractérisé en ce que** l'énergie calorifique nécessaire au chauffage de la partie des eaux industrielles à chauffer est apporté par de la vapeur avec laquelle cette partie des eaux industrielles est mise en contact.

5. Procédé selon l'une quelconque des revendications 1 à 4, **caractérisé en ce que** la partie des eaux industrielles à chauffer est chauffée dans un environnement sous pression.

6. Procédé selon la revendication 5, **caractérisé en ce que** la pression est engendrée, dans une enceinte ou dans l'un quelconque des conduits de l'installation, par accélération de la partie des eaux et **en ce que** la partie des eaux chauffée traverse un détendeur avant de se mélanger avec le restant des eaux industrielles.

7. Procédé selon l'une quelconque des revendications 1 à 6, **caractérisé en ce que** la température seuil est environ 80 °C.

8. Procédé selon l'une quelconque des revendications 1 à 7, **caractérisé en ce qu'**il comprend une étape complémentaire classique de traitement des eaux par introduction de biocides.

9. Dispositif pour la mise en oeuvre d'un procédé de traitement d'eaux industrielles utilisées dans une installation de fabrication de produits contenant des fibres cellulosiques, **caractérisé en ce qu'**il comprend des moyens de chauffage permettant de chauffer une partie des eaux industrielles à une température supérieure à une température seuil et de mélanger cette partie des eaux, après l'avoir chauffée, avec le restant des eaux industrielles de l'installation.

10. Dispositif selon la revendication 9, **caractérisé en ce que** la partie des eaux industrielles à chauffer est dérivée vers une enceinte de traitement

11. Dispositif selon la revendication 9, **caractérisé en ce que** la partie des eaux industrielles à chauffer est chauffée dans l'un quelconque des conduits de l'installation, sans dérivation.

12. Dispositif selon l'une quelconque des revendications 9 à 11, **caractérisé en ce qu'**il est conçu pour fonctionner sous pression.
